(19) Europäisches Patentamt / European Patent Office / Office européen des brevets

(11) **EP 4 733 451 A1**

(12) **EUROPEAN PATENT APPLICATION**
published in accordance with Art. 153(4) EPC

(43) Date of publication:
**29.04.2026   Bulletin 2026/18**

(21) Application number: **24825846.9**

(22) Date of filing: **14.06.2024**

(51) International Patent Classification (IPC):
**C25B 11/075** (2021.01)    **C25B 1/04** (2021.01)
**C25B 9/00** (2021.01)    **C25B 13/08** (2006.01)

(52) Cooperative Patent Classification (CPC):
**C25B 1/04; C25B 9/00; C25B 11/075; C25B 13/08;**
Y02E 60/36

(86) International application number:
**PCT/JP2024/021773**

(87) International publication number:
**WO 2024/262445 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **23.06.2023   JP 2023103752**

(71) Applicant: **Panasonic Intellectual Property Management Co., Ltd.**
**Kadoma-shi, Osaka 571-0057 (JP)**

(72) Inventors:
• **MURASE, Hideaki**
  **Kadoma-shi, Osaka 571-0057 (JP)**
• **SAWADA, Koichi**
  **Kadoma-shi, Osaka 571-0057 (JP)**
• **HAYASHI, Takao**
  **Kadoma-shi, Osaka 571-0057 (JP)**

(74) Representative: **Eisenführ Speiser Patentanwälte Rechtsanwälte PartGmbB**
**Gollierstraße 4**
**80339 München (DE)**

(54) **ELECTRODE FOR WATER ELECTROLYSIS, ANODE FOR WATER ELECTROLYSIS, CATHODE FOR WATER ELECTROLYSIS, WATER ELECTROLYSIS CELL, AND WATER ELECTROLYSIS DEVICE**

(57)    A water electrolysis electrode 1 includes an electroconductive substrate 10 and a layered double hydroxide (LDH) layer 20. The layered double hydroxide layer 20 is formed on a surface of the electroconductive substrate 10. An effective film thickness of the layered double hydroxide layer 20 is 250 nm or more and less than 4000 nm. The layered double hydroxide layer 20 may include layered double hydroxide 20a. The effective film thickness of the layered double hydroxide layer 20 may be 3470 nm or less.

FIG.1

EP 4 733 451 A1

**Description**

TECHNICAL FIELD

The present disclosure relates to a water electrolysis electrode, a water electrolysis anode, a water electrolysis cathode, a water electrolysis cell, and a water electrolysis device.

BACKGROUND ART

Water electrolysis electrodes have been known.

Patent Literature 1 describes a method for manufacturing a water electrolysis electrode, and the method includes a step of immersing an electrode substrate in an organic solvent, where the electrode substrate includes a predetermined layered double hydroxide. In this manufacturing method, the electrode substrate is manufactured by performing an electrodeposition process in an aqueous solution containing a compound including a metal M1 and a compound including a metal M2, by use of an electroconductive substrate as an anode.

Patent Literature 2 describes an oxygen evolution catalyst including an oxidized graphene layer and a nickel-iron layered double hydroxide layer supported on a surface of the oxidized graphene layer, wherein the average thickness of the oxidized graphene layer is 0.33 to 4 nm.

In Non Patent Literature 1, activity of oxygen evolution reaction (OER) of a Ni-Fe layered double hydroxide (Ni-Fe LDH) electrode is examined.

In Non Patent Literature 2, it is described that the local electronic structure of Ni-Fe LDH is adjusted by an interfacial interaction between FeOOH and the Ni-Fe LDH, which enhances the OER electrode-catalytic activity.

CITATION LIST

Patent Literature

Patent Literature 1: WO 2017-154134 A1
Patent Literature 2: JP 2018-043193 A

Non Patent Literature

Non Patent Literature 1: Seyeong Lee et al, "Operational durability of three-dimensional Ni-Fe layered double hydroxide electrocatalyst for water oxidation," ElectrochimicaActa, 2019, Vol. 315, p. 94-101
Non Patent Literature 2: Jiande Chen et al, "Interfacial Interaction between FeOOH and Ni-Fe LDH to Modulate the Local Electronic Structure for Enhanced OER Electrocatalysis," ACS Catalysis, 2018, Vol. 8, p. 11342-11351

SUMMARY OF INVENTION

Technical Problem

The invention described in the above literatures needs to be reconsidered from the viewpoint of improvement of performance of water electrolysis electrodes. Therefore, the present disclosure provides a water electrolysis electrode advantageous from the viewpoint of exhibiting superior performance.

Solution to Problem

The present disclosure provides a water electrolysis electrode, including:

an electroconductive substrate; and
a layered double hydroxide layer disposed on a surface of the electroconductive substrate, wherein
an effective film thickness of the layered double hydroxide layer is 250 nm or more and less than 4000 nm.

Advantageous Effects of Invention

According to the present disclosure, it is possible to provide a water electrolysis electrode advantageous from the viewpoint of exhibiting superior performance.

BRIEF DESCRIPTION OF DRAWINGS

FIG. 1 is a cross-sectional view schematically showing an example of a water electrolysis electrode of the present disclosure.
FIG. 2 is a cross-sectional view schematically showing an example of an optical model of a water electrolysis electrode obtained by spectroscopic ellipsometry.
FIG. 3 is a diagram schematically showing an example of a crystal structure of a layered double hydroxide (LDH).
FIG. 4 is a diagram schematically showing a mechanism in manufacture of a water electrolysis electrode.
FIG. 5 is a cross-sectional view showing an example of a water electrolysis cell of the present disclosure.
FIG. 6 is a cross-sectional view showing an example of a water electrolysis device of the present disclosure.
FIG. 7 is a cross-sectional view showing another example of a water electrolysis cell of the present disclosure.
FIG. 8 is a cross-sectional view showing another example of a water electrolysis device of the present disclosure.

DESCRIPTION OF EMBODIMENTS

(Findings on which the present disclosure is based)

Use of renewable energy sources such as solar power and wind power has been attracting attention as a measure against global warming. Power generation using renewable energy sources may lead to a problem of surplus electricity being wasted. For this reason, the efficiency of renewable energy use is not necessarily sufficient. Therefore, methods of making effective use of surplus electricity by producing and storing hydrogen using surplus electricity are being considered.

Electrolysis of water is a possible method for producing hydrogen using surplus electricity. In order to produce hydrogen affordably and stably, there is a demand for development of a highly efficient, long-life water electrolysis device.

In a water electrolysis device, oxygen is evolved at an anode, and hydrogen is evolved at a cathode. The reaction in which the oxygen is evolved at the anode is also called an anodic reaction, and the reaction in which the hydrogen is evolved at the cathode is also called a cathodic reaction. In order to provide a water electrolysis device superior in electrode efficiency, it is desirable that the overpotential is low especially at the anode. In addition, it is desirable that the overpotential is low at the cathode as well. Therefore, development of a high-performance electrode for an anodic reaction or a cathodic reaction in water electrolysis is highly anticipated.

For example, a layered double hydroxide (LDH) is considered to be a promising material for water electrolysis electrodes from the viewpoint of its large specific surface area and various combinations of metal ions. Patent Literature 1 describes a method for manufacturing a water electrolysis electrode that includes a layered double hydroxide represented by a predetermined composition formula, where the water electrolysis electrode is manufactured by performing pulse electrodeposition in an aqueous solution containing a compound including a metal M1 and a compound including a metal M2, using an electroconductive substrate as an anode. However, the performance of electrodes manufactured by the electrodeposition was insufficient, leaving room for improvement. Through intensive researches, the present inventors have newly discovered that the performance of a water electrolysis electrode having a LDH layer formed on an electroconductive substrate is enhanced when the LDH layer has a predetermined effective film thickness. Based on the novel finding, the present inventors have completed a water electrolysis electrode according to the present disclosure.

Embodiments of the present disclosure are described below with reference to the attached drawings. The present disclosure is not limited to the following embodiments. The embodiments described below are all intended to provide comprehensive or specific examples. Therefore, the numerical values, the shapes, the materials, the components, the arrangement or the positions of the components, the connection forms or the like shown in the following embodiments are simply intended to demonstrate examples, but are not intended to limit the present disclosure. Among the components in the following embodiments, the components that are not described in the independent claims indicating the broadest concept are described as optional components. Descriptions of components with the same reference numerals in the drawings may be omitted. The drawings show each component schematically to facilitate understanding, so that the shapes, the dimensional ratios and the like may not be accurately depicted.

(First embodiment)

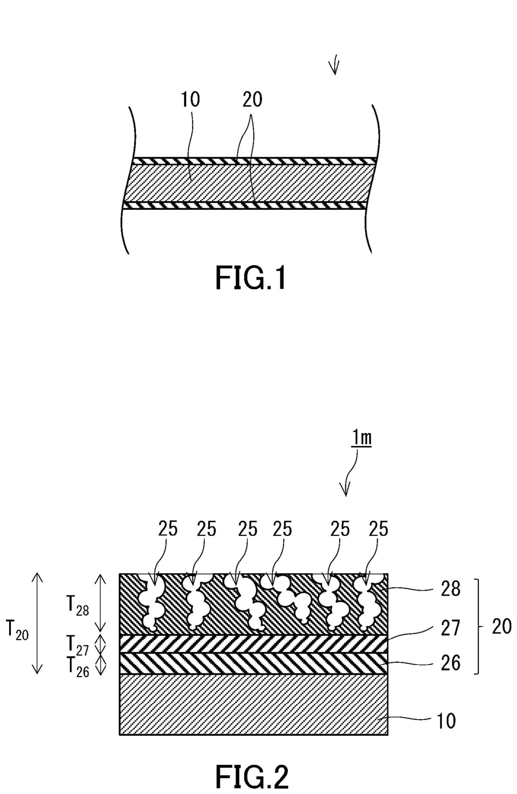

FIG. 1 is a cross-sectional view schematically showing a water electrolysis electrode according to the present disclosure. As shown in FIG. 1, a water electrolysis electrode 1 includes an electroconductive substrate 10 and a layered double hydroxide (LDH) layer 20. The LDH layer 20 is disposed on a surface of the electroconductive substrate 10. The LDH layer 20 can function as a catalyst for an anodic reaction or a cathodic reaction in water electrolysis. The LDH layer 20 includes LDH as a catalyst for water electrolysis.

In the water electrolysis electrode 1, the effective film thickness of the LDH layer 20 is 250 nm or more and less than 4000 nm. The effective film thickness correlates with the amount of LDH included in the LDH layer 20. In the case where the effective film thickness of the LDH layer 20 is 250 nm or more and less than 4000 nm, the amount of LDH contributing to the water electrolysis reaction in the water electrolysis electrode 1 can be increased, thereby suppressing increase in reaction resistance. As a result, it is possible to obtain a water electrolysis electrode 1 with superior electrode activity, enabling the water electrolysis electrode 1 to exhibit superior performance.

The LDH layer 20 is bonded to the electroconductive substrate 10, for example. For example, between the LDH layer 20 and the electroconductive substrate 10, any adhesive layer including organic materials such as polymers is not arranged, and thus, the LDH layer 20 is bonded directly to the surface of the electroconductive substrate 10.

The water electrolysis electrode 1 includes the LDH layer 20, and the LDH layer 20 includes the LDH. The LDH can contribute to the water electrolysis reaction. Therefore, when the water electrolysis electrode 1 includes LDH, performance of the water electrolysis electrode 1 can be improved. However, the researches by the present inventors have clarified that it is difficult to improve the performance of the water electrolysis electrode 1 by simply increasing the amount of LDH to increase the film thickness of the LDH layer 20 in the water electrolysis electrode 1. This is presumed to be due to the non-uniform distribution of the LDH in the LDH layer 20. In the case where the LDH is distributed non-uniformly, the LDH layer 20 may include LDH incapable of contributing to the water electrolysis reaction. Therefore, in order to improve the performance of the water electrolysis electrode 1, it is necessary to consider the distribution of the LDH in the LDH layer 20. The film thickness of the LDH layer 20 can be measured, for example, using an electron microscope. However, analysis using an electron microscope does not allow for the evaluation of the distribution of LDH in the LDH layer 20, including the deeper portion of the LDH layer 20. As described later, the distribution of LDH in the LDH layer 20 is taken into account in measurement of the effective film thickness. In other words, the effective film thickness differs from the film thickness measured by an electron microscope in that it takes into account the distribution of LDH in the LDH layer 20. The present inventors have discovered that it is possible to improve the performance of the water electrolysis electrode 1 by appropriately adjusting the effective film thickness.

[Layered double hydroxide layer]

The effective film thickness of the LDH layer 20 can be calculated by steps S1 to S4.

The step S1 is a step of measuring a reflection spectrum of the water electrolysis electrode 1 by spectroscopic ellipsometry and obtaining measurement data E of polarization parameters of the water electrolysis electrode 1. The step S2 is a step of creating an optical model of the water electrolysis electrode 1 and obtaining simulation data M of the polarization parameters based on the optical model. The step S3 is a step of fitting the simulation data M of the polarization parameters to the measurement data E of the polarization parameters. The step S4 is a step of calculating an effective film thickness by use of the results of the fitting calculation and the following Formula (1).

$$\text{Effective film thickness [nm]} = \Sigma(R_{28i} \times T_{28i}) + T_{27} + (R_{26} \times T_{26}) \quad \text{Formula (1)}$$

In Formula (1), i is an integer equal to or greater than 1. $R_{28i}$ indicates the volume proportion [%] of the LDH in the i-th layer of the surface roughness layer 28. $T_{28i}$ indicates the thickness [nm] of the i-th layer of the surface roughness layer 28. $T_{27}$ indicates the thickness [nm] of the dense layer 27. $R_{26}$ indicates the volume proportion [%] of the LDH in the interface layer 26. $T_{26}$ indicates the thickness [nm] of the interface layer 26.

In the step S1, the reflection spectrum of the water electrolysis electrode 1 is measured by spectroscopic ellipsometry. Through the step S1, the measurement data E of the polarization parameters of the water electrolysis electrode 1 can be obtained.

In the step S2, an optical model of the water electrolysis electrode 1 is created. Through the step S2, the simulation data M of polarization parameters based on the optical model can be obtained.

FIG. 2 is a cross-sectional view schematically showing an example of an optical model of a water electrolysis electrode obtained by spectroscopic ellipsometry. As shown in FIG. 2, an optical model 1m includes a LDH layer 20 and an electroconductive substrate 10. The LDH layer 20 has a predetermined thickness $T_{20}$. The LDH layer 20 includes a surface roughness layer 28, a dense layer 27, and an interface layer 26. The surface roughness layer 28 has voids 25. The surface roughness layer 28 has a predetermined thickness $T_{28}$. The dense layer 27 has a predetermined thickness $T_{27}$. The interface layer 26 has a predetermined thickness $T_{26}$.

The thickness $T_{28}$ of the surface roughness layer 28, the thickness $T_{27}$ of the dense layer 27, and the thickness $T_{26}$ of the interface layer 26 are determined by the fitting described below. As shown in FIG. 2, in the optical model 1m, the LDH layer 20 includes the interface layer 26, the dense layer 27, and the surface roughness layer 28 in order of proximity to the electroconductive substrate 10 in the thickness direction. The interface layer 26 is formed of the material of the electroconductive substrate 10 and the LDH included in the LDH layer 20. The dense layer 27 is composed only of the LDH included in the LDH layer 20. The surface roughness layer 28 is formed of the air that can be present in the voids 25 and the LDH included in the LDH layer 20. The volume proportions of the material of the electroconductive substrate 10 and the LDH in the interface layer 26 can be predetermined proportions. The volume proportion of the LDH and the volume proportion of the air in the surface roughness layer 28 can be predetermined proportions.

In the step S3, fitting calculations are performed. In the step S3, the simulation data M of the polarization parameters is fit to the measurement data E of the polarization parameters.

Based on the aforementioned optical model 1m, a fitting calculation is performed. Thereby, the thickness $T_{28}$, the thickness $T_{27}$, and the thickness $T_{26}$ can be determined. In addition, the volume proportion of the LDH and the volume proportion of air in the surface roughness layer 28 as well as the volume proportions of the material of the electroconductive substrate 10 and the LDH in the interface layer 26 can be determined. As a result, the distribution of LDH within the LDH layer 20 can be evaluated.

The fitting calculation can be performed, for example, using predetermined software, such that the mean square error between the simulation data calculated from the optical model 1m and the measured data is 10° or less. For example, the fitting calculation may be performed using the New Amorphous model and the Tauc-Lorentz model as implemented by HORIBA Jobin Yvon, and the calculation result with the smaller mean square error may be adopted.

The number of layers forming the surface roughness layer 28 is determined by a fitting calculation. The surface roughness layer 28 may be a single layer or may be formed of two or more layers. In the case where the surface roughness layer 28 is formed of two or more layers, the surface roughness layer 28 has a first to an n-th layer, where n is an integer of two or more. The surface roughness layer 28 is laminated from the first layer to the n-th layer in order of proximity to the dense layer 27 in the thickness direction. The upper limit value of n is not limited to a specific value. The upper limit value of n is, for example, 5.

In the case where the surface roughness layer 28 is formed of two or more layers, each layer has a predetermined thickness. The volume proportion of the LDH and the volume proportion of air in the n-th layer of the surface roughness layer 28 can be determined by the aforementioned fitting calculation.

In the step S4, the effective film thickness is calculated by the Formula (1) using the fitting result obtained in the step S3.

The effective film thickness of the LDH layer 20 may be 410 nm or more, or may be 500 nm or more. This allows for further reduction of overvoltage in the anodic reaction and the cathodic reaction during water electrolysis, enabling the water electrolysis electrode 1 to exhibit even superior performance.

The effective film thickness of the LDH layer 20 may be 3470 nm or less, 2750 nm or less, 2010 nm or less, 1500 nm or less, or 1200 nm or less. This allows for further reduction of overvoltage in the anodic reduction and the cathodic reaction during water electrolysis, enabling the water electrolysis electrode 1 to exhibit even superior performance.

In the case where the effective film thickness of the LDH layer 20 is 250 nm or more and 1200 nm or less, or in the case where the effective film thickness is 2100 nm or more and 2750 nm or less, the thickness $T_{28}$ tends to be greater than the thickness $T_{27}$. In this case, the gas evolution reaction can be further promoted.

In the LDH layer 20, in the case where the effective film thickness is more than 1200 nm and less than 2100 nm, or in the case the effective film thickness is more than 2750 nm and less than 4000 nm, the thickness $T_{28}$ tends to be smaller than the thickness $T_{27}$. In this case, the durability of the water electrolysis electrode 1 can be further improved.

The LDH layer 20, for example, covers the surface of the electroconductive substrate 10. A coverage of the LDH layer 20 with regard to the surface of the electroconductive substrate 10 is not limited to a specific value. The coverage is desirably 99% or more. In this case, the water electrolysis electrode 1 is likely to have high electrode activity. In addition, the water electrolysis electrode 1 is likely to have high durability.

[Electroconductive substrate]

The electroconductive substrate 10 is not limited to a particular substrate as long as it has electrical conductivity. The electroconductive substrate 10 may include a metal, or it may include a resin. The entire electroconductive substrate 10 may be formed of a metal. The electroconductive substrate 10 may have a structure in which a surface layer including a metal is formed on a member of a resin such as polypropylene or polyethylene. In this case, the surface layer including the metal may be a plated film or a sputtered film. The metal included in the electroconductive substrate may be a pure metal such as nickel and iron, or an alloy such as stainless steel or Inconel. Inconel is a registered trademark.

The electroconductive substrate 10 desirably has a surface formed of nickel. In this case, the electroconductive substrate 10 is likely to have superior alkali resistance. In the case where the surface of the electroconductive substrate 10 is formed of nickel, the entire electroconductive substrate 10 may be formed of nickel, or the electroconductive substrate 10 may have a surface layer formed of nickel. The surface layer formed of nickel is a sputtered film or a plated film.

In the case where the electroconductive substrate 10 has a surface formed of nickel, purity of the nickel forming the surface is not limited to a specific value. The purity may be, for example, 90 mass% or more. In this case, the electroconductive substrate 10 can have superior alkali resistance. The method for determining the purity of the nickel forming the surface of the electroconductive substrate 10 is not limited to a specific method. The purity may be determined by an elemental analysis such as X-ray fluorescence (XRF) spectroscopy or energy-dispersive X-ray (EDX) spectroscopy. The purity of the nickel forming the surface of the electroconductive substrate 10 may also be determined, for example, by analyzing an extract obtained by completely dissolving the electroconductive substrate 10 in aqua regia using a method such as inductively coupled plasma atomic emission spectroscopy (ICP-AES). In the case where the nickel purity is high, the purity of the nickel forming the surface of the electroconductive substrate 10 may be determined by comparing the specific gravity of the electroconductive substrate 10 with the specific gravity of pure nickel.

The purity of the nickel forming the surface of the electroconductive substrate 10 is desirably 95 mass% or more, more desirably, 97 mass% or more, further desirably 98 mass% or more, and particularly desirably 99 mass% or more.

The shape of the electroconductive substrate 10 is not limited particularly. The electroconductive substrate 10 has, for example, a sheet shape. The electroconductive substrate 10 may have a non-porous structure, such as a plate or a foil, or it may have a porous structure, such as expanded metal, a mesh, a foamed body, or a non-woven fabric. The electroconductive substrate 10 desirably has a porous structure. In this case, the surface area of the electroconductive substrate 10 is likely to increase, and the gas evolved during the water electrolysis reaction is likely to be diffused.

The thickness of the electroconductive substrate 10 is not limited to a specific value. The thickness of the electroconductive substrate is, for example, 0.02 mm or more. In this case, the electroconductive substrate can be handled easily. The thickness of the electroconductive substrate 10 is, for example, 10 mm or less, and desirably 1 mm or less.

[Layered double hydroxide]

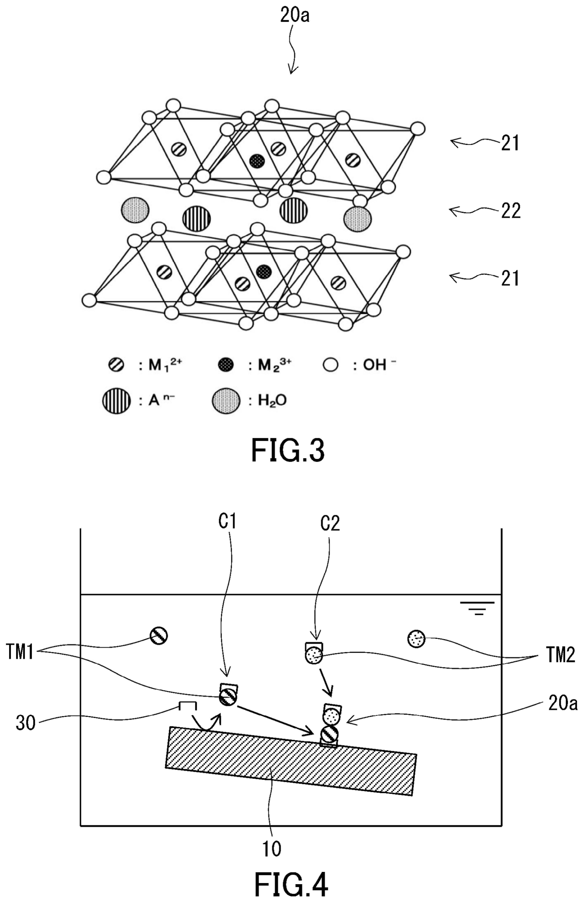

FIG. 3 is a diagram schematically showing an example of a crystal structure of the LDH. An LDH 20a included in the LDH layer 20 is active with regard to a reaction for evolving a gas such as hydrogen and oxygen, at the anode or the cathode for water electrolysis. For example, the LDH 20a can transform into hydroxides in alkaline water electrolysis.

The LDH 20a has a composition represented, for example, by the following Formula (2). In Formula (2), $M1^{2+}$ is a divalent transition metal ion. $M2^{3+}$ is a trivalent transition metal ion. $A^{n-}$ is an interlayer anion. $x$ is a rational number that satisfies a requirement $0 < x < 1$. $y$ is a number that corresponds to the required amount of charge balance. $n$ is an integer. And, $m$ is a suitable rational number.

$$[M1^{2+}_{1-x}M2^{3+}_{x}(OH)_2]\ [yA^{n-}\cdot mH_2O] \qquad \text{Formula (2)}$$

The LDH 20a includes two or more transition metals, for example. The two or more transition metals in the LDH 20a are not limited to specific transition metals. In other words, M1 and M2 in the composition represented by Formula (2) are not limited to specific transition metals. The LDH 20a includes at least two transition metals selected from the group consisting of V, Cr, Mn, Fe, Co, Ni, Cu, W, and Ru, for example. In this case, the water electrolysis electrode 1 is likely to have superior electrode activity.

The LDH 20a desirably includes at least one transition metal selected from the group consisting of Fe and Ni. In this case, the water electrolysis electrode 1 can have even superior electrode activity. In addition, the cost for manufacturing the water electrolysis electrode 1 is likely to be reduced.

The LDH 20a may include Ni and Fe. For example, in the composition shown in Formula (2), M1 may be Ni and M2 may be Fe. In this case, the water electrolysis electrode 1 can have even superior electrode activity.

In the LDH 20a, $A^{n-}$ as an interlayer anion may be an inorganic ion or an organic ion. Examples of inorganic ions include $CO_3^{2-}$, $NO_3^-$, $Cl^-$, $SO_4^{2-}$, $Br^-$, $OH^-$, $F^-$, $I^-$, $Si_2O_5^{2-}$, $B_4O_5(OH)_4^{2-}$, and $PO_4^{3-}$. Examples of organic ions include $CH_3(CH_2)_nSO_4^-$, $CH_3(CH_2)_nCOO^-$, and $CH_3(CH_2)_nPO_4^{2-}$. $A^{n-}$ can be inserted between layers of metal hydroxide together with water molecules. The charge and ion size of $A^{n-}$ are not limited to specific values. The LDH 20a may contain one kind of $A^{n-}$ or may contain multiple kinds of $A^{n-}$.

As shown in FIG. 3, the LDH 20a has an $OH^-$ ion at each vertex of each octahedron centered on $M1^{2+}$ or $M2^{3+}$. The LDH 20a includes a metal hydroxide represented by $[M1^{2+}_{1-x}M2^{3+}_{x}(OH)_2]^{x+}$. This metal hydroxide has a layered structure in which the octahedra of the hydroxide share edges and are linked in two dimensions. Between the layers of the metal hydroxide, the anions $A^{n-}$ and water molecules are present. The layers of the metal hydroxide function as host layers 21, while a guest layer 22 containing anions $A^{n-}$ and water molecules is arranged between the host layers. In other words, the LDH 20a as a whole has a sheet-like structure in which the host layers of the metal hydroxide and the guest layer of anions

EP 4 733 451 A1

$A^{n-}$ and water molecules are alternately stacked. The LDH 20a has a structure in which some amount of the $M1^{2+}$ contained in the metal hydroxide layer is replaced by $M2^{3+}$.

The crystal structure of LDH 20a and the crystallinity of the LDH 20a can be analyzed qualitatively and quantitatively by X-ray diffraction measurement (XRD).

[Chelating agent]

The LDH layer 20 may include a chelating agent. The chelating agent may coordinate to the transition metal ions included in the LDH 20a. Thereby, the LDH 20a can be stably present in the LDH layer 20. In addition, the LDH 20a is likely to have a small particle size. Furthermore, the LDH layer 20, which is regarded as a dense layer including the LDH 20a and having few voids, is likely to have a desired thickness and to be firmly fixed to the electroconductive substrate 10. This is because the nucleated LDH is likely to grow slowly to be crystalline in the case of forming the LDH layer 20 on the electroconductive substrate 10. These make it easier for the LDH layer 20 to effectively contribute to the anodic reaction or the cathodic reaction in the water electrolysis, and the water electrolysis electrode 1 can have even superior electrode activity.

The chelating agent is not limited to a specific chelating agent. The chelating agent is, for example, an organic compound capable of coordinating with transition metal ions in LDH 20a. The chelating agent may be at least one selected from the group consisting of a bidentate organic ligand and a tridentate organic ligand. Examples of the chelating agents include β-diketones, β-keto esters, hydroxycarboxylic acids, and hydroxycarboxylates. Examples of the β-diketones include acetylacetone (ACAC), trifluoroacetylacetone, hexafluoroacetylacetone, benzoylaceton, tenoyl trifluoroacetone, dipivaloylmethane, dibenzoylmethane, and ascorbic acid. Examples of the β-keto esters include methyl acetoacetate, ethyl acetoacetate, allyl acetoacetate, benzyl acetoacetate, n-propyl acetoacetate, iso-propyl acetoacetate, n-butyl acetoacetate, iso-butyl acetoacetate, tert-butyl acetoacetate, 2-methoxyethyl acetoacetate, and methyl 3-oxopentanoate. Examples of the hydroxycarboxylic acids and their salts include tartaric acid, citric acid, malic acid, gluconic acid, ferulic acid, lactic acid, glucuronic acid, and their salts.

The chelating agent desirably includes at least one selected from the group consisting of an acetylacetonate and a citrate. In this case, the water electrolysis electrode 1 can have superior electrode activity. An example of the citrates is trisodium citrate.

The method for manufacturing the water electrolysis electrode 1 is not limited to a specific method. For example, the water electrolysis electrode 1 is manufactured by adjusting a solution with an electroconductive substrate 10 immersed therein to be alkaline, where the solution includes a chelating agent and two or more transition metal ions. According to this method, an LDH layer 20 including the LDH and the chelating agent can be formed on the electroconductive substrate 10 in a simple manner.

The temperature of the solution when adjusting the solution to be alkaline is not limited to a specific temperature. For example, the temperature of the solution is 20°C $\pm$ 15°C. In this case, a water electrolysis electrode 1 having even superior electrode activity can be obtained.

The solvent of the solution may be water, an organic solvent, or a mixture of water and an organic solvent.

The method for manufacturing the water electrolysis electrode 1 desirably includes increasing the pH. This allows the LDH 20a to be formed on the surface of the electroconductive substrate 10 in a short period of time, whereby a water electrolysis electrode 1 having superior electrode activity can be obtained. In addition, the thus manufactured water electrolysis electrode 1 is likely to have superior durability.

The method of adjusting the solution to be alkaline is not limited to a specific method. For example, the solution may be adjusted to be alkaline by mixing the above-described solution with an alkaline solution. Alternatively, the solution may be adjusted to be alkaline by adding a pH booster to the solution. In this case, the pH booster is not limited to a specific compound. The pH booster is, for example, a compound having an epoxy group. Examples of the pH booster include propylene oxide (POX), ethylene oxide, and butylene oxide.

When a pH booster having an epoxy group such as propylene oxide is added to the solution, in the presence of a nucleophile such as a chloride ion, the pH booster can capture hydrogen ions present in the solution, following the ring-opening reaction of the epoxy group. As a result, the pH of the solution rises, and the solution can be alkaline. The pH of the solution including the chelating agent and two or more transition metal ions is 1, for example. When the pH booster is added to the solution, the pH of the solution rises gradually from 1, for example, and eventually the solution can be alkaline. The final pH of the solution is, for example, 8 or more and 12 or less. Addition of the pH booster to the solution promotes the reaction in which hydrogen ions in the solution is captured. Thereby, the pH of the solution gradually rises. The time period from the addition of the pH booster to the solution until the pH of the solution reaches a steady state is not limited to a specific time period. That time period can be, for example, 24 hours or longer, or several days.

The two or more transition metal ions contained in the solution are not limited to specific transition metal ions. The two or more transition metal ions contained in the solution are, for example, ions of at least two transition metals selected from the group consisting of V, Cr, Mn, Fe, Co, Ni, Cu, W, and Ru. In this case, the water electrolysis electrode 1 having even

7

superior electrode activity can be manufactured.

The two or more transition metal ions contained in the solution desirably include at least one transition metal ion selected from the group consisting of Ni and Fe. In this case, the water electrolysis electrode 1 having even superior electrode activity can be manufactured.

The surface of the electroconductive substrate 10 is desirably made of nickel. In this case, a water electrolysis electrode having advantageous properties, for example, from the viewpoint of achieving both corrosion resistance and electrical conductivity in alkaline water electrolysis, can be manufactured easily.

The electroconductive substrate 10 desirably includes nickel. The two or more transition metal ions contained in the solution desirably include an Fe ion. The solution desirably contains a chloride ion. In this case, the reaction indicated by Formula (3) can occur. Thereby, the electroconductive substrate 10 can be etched. The method for manufacturing the water electrolysis electrode 1 desirably includes promoting mixing of the solution before adjusting the solution to be alkaline in the state where the electroconductive substrate 10 is immersed in the solution.

$$4Ni^{2+}Cl^-_2 + 2Fe^{3+}Cl^-_3 + 2Ni \rightarrow 5Ni^{2+}Cl^-_2 + 2Fe^{2+}Cl^-_2 + Ni \qquad \text{Formula (3)}$$

The promotion of mixing of the solution can be achieved, for example, by vibrating the electroconductive substrate 10, shaking the container in which the solution and the electroconductive substrate 10 are contained, or stirring the solution using a stirrer with a stirrer bar. With this method, a forced convection of the solution occurs, and mixing of the solution can be promoted. This allows the electroconductive substrate 10 to be etched, and the LDH layer 20 can be formed on the surface of the electroconductive substrate 10. The mixing of the solution may be promoted while the container containing the solution and the electroconductive substrate 10 is sealed, or the mixing may be promoted in an inert gas atmosphere.

"Promoting mixing of the solution" means facilitating the diffusion of metal ions eluted from the electroconductive substrate 10 into the solution by the method described above.

In manufacturing the water electrolysis electrode 1, a ratio of an amount of substance of Fe ion to an amount of substance of Ni included in the electroconductive substrate 10 is not limited to a specific value. For example, the ratio is 0.100 or less. In this case, it is possible to prevent the nickel included in the electroconductive substrate 10 from dissolving to make it difficult to manufacture the water electrolysis electrode 1, where the dissolution may be caused by the reaction shown by Formula (3).

The ratio may be, for example, 0.020 or more and 0.080 or less, or may be 0.020 or more and 0.050 or less. In this case, the LDH layer 20 is likely to be formed uniformly on the electroconductive substrate 10, making it possible to manufacture a water electrolysis electrode 1 having even superior electrode activity.

The chelating agent included in the solution may be selected with reference to the above examples of the chelating agents to be included in the LDH layer 20. The chelating agent included in the solution desirably includes at least one selected from the group consisting of acetylacetone and a citrate. This may improve the dispersion stability of the complex in the solution and facilitate formation of the LDH layer 20 in the water electrolysis electrode 1. As a result, the water electrolysis electrode 1 can have even superior electrode activity.

FIG. 4 is a diagram schematically showing an example of a mechanism in manufacture of a water electrolysis electrode 1. As shown in FIG. 4, an electroconductive substrate 10 is immersed in a solution that includes a transition metal ion TM1, a transition metal ion TM2, and a chelating agent 30. For example, the transition metal ion TM1 is a Ni ion and the transition metal ion TM2 is an Fe ion. Further, Ni is present on the surface of the electroconductive substrate 10. Some amount of the transition metal ion TM2 allows the Ni present on the surface of the electroconductive substrate 10 to be eluted by etching. Some amount of the chelating agent 30 reacts with the surface of the electroconductive substrate 10, and a complex C1 is formed from the transition metal ion TM1 derived from the electroconductive substrate 10 and the chelating agent 30. In addition, when the solution is adjusted to be alkaline, a complex C1 of the transition metal ion TM1 derived from the solution and the chelating agent 30 is formed, and a complex C2 of the transition metal ion TM2 and the chelating agent 30 is formed in the solution. Next, the complex C1 reacts with the complex C2 on the surface of the electroconductive substrate 10, whereby the LDH 20a is synthesized to coat the surface of the electroconductive substrate 10. Furthermore, since the complex C1 and the complex C2 include the chelating agent 30, the crystal growth of the LDH 20a is inhibited. As a result, an LDH layer 20 including the LDH 20a and the chelating agent 30 is formed on the surface of the electroconductive substrate 10, whereby a water electrolysis electrode 1 is obtained.

The water electrolysis electrode 1 according to the present embodiment can be used, for example, as an electrode for a water electrolysis cell in an alkaline water electrolysis device or an anion-exchange membrane type water electrolysis device. The water electrolysis electrode 1 is used, for example, in at least one selected from the group consisting of the anode and the cathode in any of the water electrolysis devices. In other words, at least one selected from the group consisting of a water electrolysis anode including the water electrolysis electrode 1 and a water electrolysis cathode including the water electrolysis electrode 1 can be provided. Thereby, the activity of the anodic reaction or the cathodic reaction in a water electrolysis is likely to increase.

(Second embodiment)

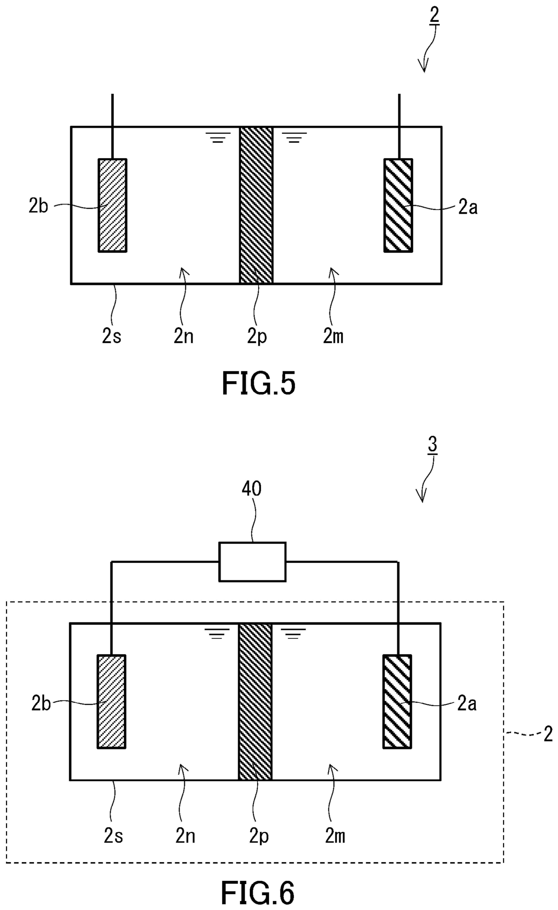

FIG. 5 is a cross-sectional view schematically showing an example of a water electrolysis cell according to a second embodiment. As shown in FIG. 5, a water electrolysis cell 2 includes an anode 2a, a cathode 2b, and a separator 2p. At least one selected from the group consisting of the anode 2a and the cathode 2b includes, for example, the water electrolysis electrode 1 according to the first embodiment. In this case, the activity of the anodic reaction or the activity of the cathodic reaction in the water electrolysis cell 2 is likely to increase, and the anode 2a or the cathode 2b can easily exhibit superior performance.

The water electrolysis cell 2 is, for example, an alkaline water electrolysis cell for which an alkaline aqueous solution is used. The alkaline aqueous solution used in the water electrolysis cell 2 is not limited to a specific alkaline aqueous solution. Examples of the alkaline aqueous solution include a potassium hydroxide aqueous solution and a sodium hydroxide aqueous solution.

As shown in FIG. 5, the water electrolysis cell 2, for example, includes an electrolysis tank 2s, a first chamber 2m, and a second chamber 2n. The separator 2p is disposed inside the electrolysis tank 2s and separates the interior of the electrolysis tank 2s into the first chamber 2m and the second chamber 2n. The anode 2a is disposed in the first chamber 2m, and the cathode 2b is disposed in the second chamber 2n.

The separator 2p is, for example, a separator for alkaline water electrolysis. The separator 2p is, for example, a sheet-shaped porous membrane. The separator 2p has a thickness, for example, in a range of 100 $\mu$m to 500 $\mu$m and has pores that serve as a passage for ions or an electrolytic solution. Materials for the separator 2p are not limited to a specific material. Examples of the material for the separator 2p include asbestos, polymer-reinforced asbestos, potassium titanate bonded with polytetrafluoroethylene (PTFE), zirconia bonded with PTFE, and antimonic acid and antimony oxide bonded with polysulfone. Other examples of materials for the separator 2p include sintered nickel, nickel coated with ceramics and nickel oxide, and polysulfone. The separator 2p may be Zirfon Perl UTP 500 manufactured by Agfa-Gevaert Group.

The anode 2a may be arranged in a state of zero gap, namely, in a state where the anode 2a is in contact with the separator 2p, or the anode 2a may be arranged in a state in which there is a gap between the anode 2a and the separator 2p. The cathode 2b may be arranged in a state being in contact with the separator 2p, or the cathode 2b may be arranged in a state in which there is a gap between the cathode 2b and the separator 2p.

The water electrolysis cell 2 electrolyzes an alkaline aqueous solution to produce hydrogen and oxygen. An aqueous solution including a hydroxide of an alkali metal or alkaline earth metal is supplied to the first chamber 2m. In addition, an alkaline aqueous solution may be supplied to the second chamber 2n. Electrolysis is carried out while an alkaline aqueous solution of a predetermined concentration is discharged from the first chamber 2m and the second chamber 2n, whereby hydrogen and oxygen are produced.

In the case where the anode 2a includes the water electrolysis electrode 1, the cathode 2b may include, for example, an electrode material known as a cathode for an alkaline water electrolysis cell. In the case where the cathode 2b includes the water electrolysis electrode 1, the anode 2a may include the electrode material known as the anode for the alkaline water electrolysis cell. In the water electrolysis cell 2, both the anode 2a and the cathode 2b may include the water electrolysis electrode 1.

With the above configuration, at least one selected from the group consisting of the anode 2a and the cathode 2b includes the water electrolysis electrode 1, and thus, the water electrolysis cell 2 can exhibit superior performance.

(Third embodiment)

FIG. 6 is a cross-sectional view schematically showing an example of a water electrolysis device according to a third embodiment. As shown in FIG. 6, a water electrolysis device 3 includes the water electrolysis cell 2 according to the second embodiment and a voltage applying unit 40. The voltage applying unit 40 applies a voltage between the cathode 2b and the anode 2a. The water electrolysis device 3 is an alkaline water electrolysis device in which an alkaline aqueous solution is used.

The voltage applying unit 40 is electrically connected to the anode 2a and the cathode 2b. The voltage applying unit 40 causes the potential of the anode 2a to become higher than the potential of the cathode 2b. The voltage applying unit 40 is not limited to a specific type of voltage applying unit as long as the voltage applying unit 40 is capable of applying a voltage between the anode 2a and the cathode 2b. The voltage applying unit 40 may be a device to adjust the voltage to be applied between the anode 2a and the cathode 2b. In the case where the voltage applying unit 40 is connected to a direct current power source such as a battery, a solar cell and a fuel cell, the voltage applying unit 40 includes a DC/DC converter, for example. In the case where the voltage applying unit 40 is connected to an alternating current power source such as a commercial power source, the voltage applying unit 40 includes an AC/DC converter, for example. The voltage applying unit 40 may be an electric power type power source, for example. In the electric power type power source, the voltage to be applied between the anode 2a and the cathode 2b, and the current to flow between the anode 2a and the cathode 2b, are adjusted such that the electric power supplied to the water electrolysis device 3 will be a predetermined set value.

With the above configuration, the water electrolysis device 3 can exhibit superior performance.

(Fourth embodiment)

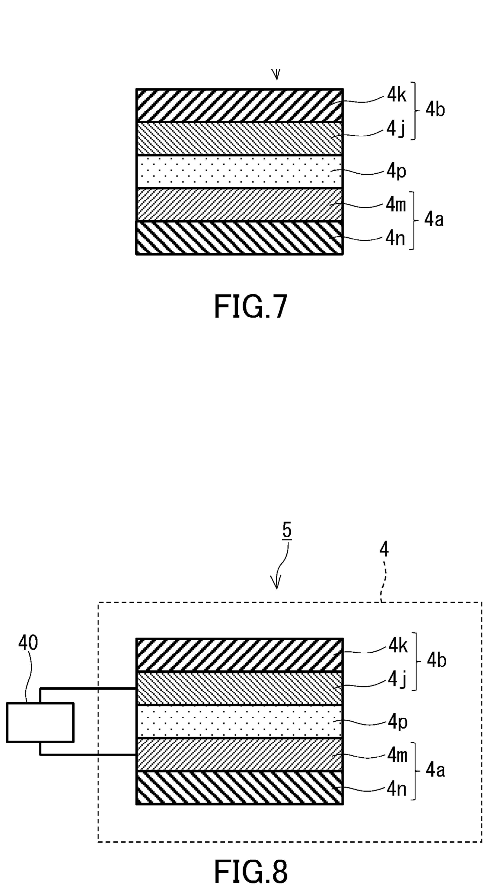

FIG. 7 is a cross-sectional view schematically showing an example of a water electrolysis cell according to a fourth embodiment. As shown in FIG. 7, a water electrolysis cell 4 includes an anode 4a, a cathode 4b, and an anion-exchange membrane 4p. In the water electrolysis cell 4, at least one selected from the group consisting of the anode 4a and the cathode 4b includes, for example, the water electrolysis electrode 1 according to the first embodiment. In this case, the activity of the anodic reaction or the activity of the cathodic reaction in the water electrolysis cell 4 is likely to increase, and the anode 4a or the cathode 4b is likely to exhibit superior performance.

The water electrolysis cell 4 is, for example, an anion-exchange membrane (AEM) type water electrolysis cell. As shown in FIG. 7, the anode 4a includes, for example, a catalyst layer 4m and a gas diffusion layer 4n. The cathode 4b includes, for example, a catalyst layer 4j and a gas diffusion layer 4k. The catalyst layer 4m of the anode 4a is in contact with one of the main surfaces of the anion-exchange membrane 4p, and the catalyst layer 4j of the cathode 4b is in contact with the other main surface of the anion-exchange membrane 4p.

The anion-exchange membrane 4p is not limited to a specific type of anion-exchange membrane. The anion-exchange membrane 4p has conductivity for anions such as hydroxide ions. The anion-exchange membrane 4p is capable of preventing mixing of the oxygen gas evolved at the anode 4a with the hydrogen gas evolved at the cathode 4b. The oxygen gas passes through the gas diffusion layer 4n and is led outside the anode 4a. The hydrogen gas passes through the gas diffusion layer 4k and is led outside the cathode 4b.

In the water electrolysis cell 4, in the case where the anode 4a includes the water electrolysis electrode 1, the cathode may be a known cathode in an AEM-type water electrolysis cell. At this time, the LDH layer 20 of the water electrolysis electrode 1 can function as the catalyst layer 4m, and the electroconductive substrate 10 of the water electrolysis electrode 1 may function as the gas diffusion layer 4n. In the water electrolysis cell 4, in the case where the cathode 4b includes the water electrolysis electrode 1, the anode 4a may be a known anode in the AEM-type water electrolysis cell. At this time, the LDH layer 20 of the water electrolysis electrode 1 may function as the catalyst layer 4j, and the electroconductive substrate 10 of the water electrolysis electrode 1 may function as the gas diffusion layer 4k. In the water electrolysis cell 4, both the anode 4a and the cathode 4b may include the water electrolysis electrode 1.

With the above configuration, at least one selected from the group consisting of the anode 4a and the cathode 4b includes the water electrolysis electrode 1, whereby the water electrolysis cell 4 can exhibit superior performance.

(Fifth embodiment)

FIG. 8 is a cross-sectional view schematically showing an example of a water electrolysis device according to a fifth embodiment. As shown in FIG. 8, a water electrolysis device 5 includes a water electrolysis cell 4 and a voltage applying unit 40. The voltage applying unit 40 applies a voltage between a cathode 4b and an anode 4a. The water electrolysis device 5 is, for example, an AEM-type water electrolysis device.

The voltage applying unit 40 is electrically connected to the anode 4a and to the cathode 4b. The voltage applying unit 40 causes the potential of the anode 4a to become higher than the potential of the cathode 4b. The voltage applying unit 40 is not limited to a specific type of voltage applying unit as long as the voltage applying unit 40 is capable of applying voltage between the anode 4a and the cathode 4b. The voltage applying unit 40 may be a unit to adjust voltage to be applied between the anode 4a and the cathode 4b. In the case where the voltage applying unit 40 is connected to a direct current power source such as a battery, solar cell, or fuel cell, the voltage applying unit 40 includes, for example, a DC/DC converter. In the case where the voltage applying unit 40 is connected to an alternating current power source such as a commercial power source, the voltage applying unit 40 includes, for example, an AC/DC converter. The voltage applying unit 40 may be, for example, an electric power type power source. In the electric power type power source, the voltage applied between the anode 4a and the cathode 4b and the current flowing between the anode 4a and the cathode 4b are adjusted such that the power supplied to the water electrolysis device 5 becomes a predetermined set value.

With the above configuration, the water electrolysis device 5 can exhibit superior performance.

(Addendum)

The following techniques are disclosed by the description of the above embodiments.

(Technique 1)

A water electrolysis electrode, including:

an electroconductive substrate; and
a layered double hydroxide layer formed on a surface of the electroconductive substrate, wherein
an effective film thickness of the layered double hydroxide layer is 250 nm or more and less than 4000 nm.

According to Technique 1, a water electrolysis electrode advantageous from the viewpoint of exhibiting superior performance can be provided.

(Technique 2)

The water electrolysis electrode according to Technique 1, wherein
the effective film thickness of the layered double hydroxide layer is 3470 nm or less.

(Technique 3)

The water electrolysis electrode according to Technique 1 or 2, wherein
the effective film thickness of the layered double hydroxide layer is 410 nm or more.
According to Techniques 2 and 3, the water electrolysis electrode can exhibit even superior electrode activity.

(Technique 4)

The water electrolysis electrode according to any one of Techniques 1 to 3, wherein
the layered double hydroxide layer includes at least two transition metals selected from the group consisting of V, Cr, Mn, Fe, Co, Ni, Cu, W, and Ru.

(Technique 5)

The water electrolysis electrode according to any one of Techniques 1 to 4, wherein
the layered double hydroxide layer includes at least one transition metal selected from the group consisting of Fe and Ni.
According to Techniques 4 and 5, the water electrolysis electrode can exhibit even superior electrode activity.

(Technique 6)

The water electrolysis electrode according to any one of Techniques 1 to 5, wherein
the layered double hydroxide layer includes a chelating agent.

(Technique 7)

The water electrolysis electrode according to Technique 6, wherein
the chelating agent includes at least one selected from the group consisting of acetylacetone and a citrate.
According to Techniques 6 and 7, the water electrolysis electrode can exhibit even superior electrode activity.

(Technique 8)

A water electrolysis anode including the water electrolysis electrode according to any one of Techniques 1 to 7.

(Technique 9)

A water electrolysis cathode including the water electrolysis electrode according to any one of Techniques 1 to 7.
According to Techniques 8 and 9, the activity of the anodic reaction or the cathodic reaction in water electrolysis is likely to increase.

(Technique 10)

A water electrolysis cell including:

an anode;
a cathode; and
a separator, wherein

at least one selected from the group consisting of the following conditions is satisfied:

the anode is the water electrolysis anode according to Technique 8; and
the cathode is the water electrolysis cathode according to Technique 9.

(Technique 11)

A water electrolysis cell including:

an anode;
a cathode; and
an anion-exchange membrane, wherein
at least one selected from the group consisting of the following conditions is satisfied:

the anode is the water electrolysis anode according to Technique 8; and
the cathode is the water electrolysis cathode according to Technique 9.

According to Techniques 10 and 11, the activity of the anodic reaction or the activity of the cathodic reaction in the water electrolysis cell is easily improved.

(Technique 12)

A water electrolysis device including:

the water electrolysis cell according to Technique 10 or 11; and
a voltage applying unit configured to apply voltage between the cathode and the anode.

According to Technique 12, the water electrolysis device can exhibit superior performance.

EXAMPLES

The present disclosure is further explained in detail by referring to Examples. The following Examples demonstrate a part of the present disclosure, and the present disclosure is not limited to the Examples.

(Example 1)

In 3.64 milliliters (mL) of water, 0.150 g of nickel chloride hexahydrate and 0.043 g of iron chloride hexahydrate were dissolved to prepare a solution. The nickel chloride hexahydrate and the iron chloride hexahydrate were products purchased from FUJIFILM Wako Pure Chemical Corporation. To this solution, 0.025 mL of acetylacetonate (ACAC) as a chelating agent was added, whereby a chelating agent solution was obtained. The ACAC was a product purchased from Sigma-Aldrich Corporation.
One Ni plate supplied by Nilaco Corporation was washed with acetone for 10 minutes and washed with a 1 mol/liter (mol/L) HCl aqueous solution for 10 minutes to degrease the Ni plate and remove impurities from the Ni plate. The Ni plate had a thickness of 0.2 mm and had a circular shape with a diameter of 15 mm in a plan view. The weight of the Ni plate was 0.315 g. Next, the Ni plate was washed with water and dried to complete the washing treatment of the Ni plate.
Next, the thus washed Ni plate was immersed in the above-described chelating agent solution. In this state, the chelating agent solution with the Ni plate was shaken and stirred at 25°C for 24 hours. At this time, the outermost surface of the Ni plate was etched according to Formula (3) above.
Next, 0.254 mL of propylene oxide (POX) as a pH booster was added to the chelating agent solution. The resulting mixed solution was shaken and stirred at 25°C for 72 hours. After 72 hours of shaking and stirring, the Ni plate was collected, washed with water, and dried. In this manner, the electrode according to Example 1 was obtained. In Example 1, a ratio of an amount of substance of Fe ion to an amount of substance of Ni included in the Ni plate (ratio Fe/Ni) was 0.030.

(Example 2)

An electrode according to Example 2 was produced in the same manner as in Example 1, except for the following points. In 3.62 mL of water, 0.123 g of nickel chloride hexahydrate and 0.070 g of iron chloride hexahydrate were dissolved to prepare a solution. To this solution, 0.0365 mL of ACAC as a chelating agent was added, whereby a chelating agent solution was obtained. To the chelating agent solution, 0.263 mL of POX as a pH booster was added. In Example 2, a ratio of an amount of substance of Fe ion to an amount of substance of Ni included in the Ni plate (ratio Fe/Ni) was 0.048.

(Example 3)

An electrode according to Example 3 was produced in the same manner as in Example 1, except for the following points. In 3.63 mL of water, 0.123 g of nickel chloride hexahydrate and 0.070 g of iron chloride hexahydrate were dissolved to prepare a solution. To this solution, 0.0245 mL of ACAC as a chelating agent was added, whereby a chelating agent solution was obtained. To the chelating agent solution, 0.264 mL of POX as a pH booster was added. In Example 3, a ratio of an amount of substance of Fe ion to an amount of substance of Ni included in the Ni plate (ratio Fe/Ni) was 0.048.

(Example 4)

An electrode according to Example 4 was produced in the same manner as in Example 1, except for the following points. In 3.64 mL of water, 0.124 g of nickel chloride hexahydrate and 0.070 g of iron chloride hexahydrate were dissolved to prepare a solution. To this solution, 0.0123 mL of ACAC as a chelating agent was added, whereby a chelating agent solution was obtained. To the chelating agent solution, 0.265 mL of POX as a pH booster was added. In Example 4, a ratio of an amount of substance of Fe ion to an amount of substance of Ni included in the Ni plate (ratio Fe/Ni) was 0.048.

(Example 5)

An electrode according to Example 5 was produced in the same manner as in Example 1, except for the following points. The weight of the Ni plate was 0.335 g. In 3.63 mL of water, 0.123 g of nickel chloride hexahydrate and 0.070 g of iron chloride hexahydrate were dissolved to prepare a solution. To this solution, 0.02 mL of ACAC as a chelating agent was added, whereby a chelating agent solution was obtained. To the chelating agent solution, 0.26 mL of POX as a pH booster was added. In Example 5, a ratio of an amount of substance of Fe ion to an amount of substance of Ni included in the Ni plate (ratio Fe/Ni) was 0.045.

(Example 6)

An electrode according to Example 6 was produced in the same manner as in Example 1, except for the following points. The weight of the Ni plate was 0.315 g. In 5.80 mL of water, 0.132 g of nickel chloride hexahydrate and 0.075 g of iron chloride hexahydrate were dissolved to prepare a solution. To this solution, 0.013 mL of ACAC as a chelating agent was added, whereby a chelating agent solution was obtained. To the chelating agent solution, 0.28 mL of POX as a pH booster was added. In Example 6, a ratio of an amount of substance of Fe ion to an amount of substance of Ni included in the Ni plate (ratio Fe/Ni) was 0.05.

(Example 7)

An electrode according to Example 7 was produced in the same manner as in Example 1, except for the following points. The weight of the Ni plate was 0.315 g. In 5.89 mL of water, 0.200 g of nickel chloride hexahydrate and 0.114 g of iron chloride hexahydrate were dissolved to prepare a solution. To this solution, 0.039 mL of ACAC as a chelating agent was added, whereby a chelating agent solution was obtained. To the chelating agent solution, 0.43 mL of POX as a pH booster was added. In Example 7, a ratio of an amount of substance of Fe ion to an amount of substance of Ni included in the Ni plate (ratio Fe/Ni) was 0.08.

(Example 8)

An electrode according to Example 8 was produced in the same manner as in Example 1, except for the following points. The weight of the Ni plate was 0.31 g. In 5.62 mL of water, 0.127 g of nickel chloride hexahydrate and 0.072 g of iron chloride hexahydrate were dissolved to prepare a solution. To this solution, 0.0253 mL of ACAC as a chelating agent was added, whereby a chelating agent solution was obtained. To the chelating agent solution, 0.226 mL of POX as a pH booster was added. In Example 8, a ratio of an amount of substance of Fe ion to an amount of substance of Ni included in the Ni plate (ratio Fe/Ni) was 0.05.

(Comparative Example 1)

An electrode according to Comparative Example 1 was prepared in the same manner as in Example 1, except for the following points. A mixed solvent was prepared by mixing 1.52 mL of water and 2.29 mL of ethanol. The ethanol was a product purchased from FUJI FILM Wako Pure Chemical Corporation. In the mixed solvent, 0.079 g of nickel chloride hexahydrate and 0.022 g of iron chloride hexahydrate were dissolved to prepare a solution. To this solution, 0.010 mL of ACAC as a chelating agent was added, whereby a chelating agent solution was obtained. To the chelating agent solution, 0.13 mL of POX as a pH booster was added. In Comparative Example 1, a ratio of an amount of substance of Fe ion to an amount of substance of Ni included in the Ni plate (ratio Fe/Ni) was 0.015.

(Comparative Example 2)

An electrode according to Comparative Example 2 was produced in the same manner as in Example 1, except for the following points. The weight of the Ni plate was 0.340 g. A mixed solvent was prepared by mixing 1.52 mL of water and 2.28 mL of ethanol. The ethanol was a product purchased from FUJIFILM Wako Pure Chemical Corporation. In the mixed solvent, 0.065 g of nickel chloride hexahydrate and 0.037 g of iron chloride hexahydrate were dissolved to prepare a solution. To this solution, 0.010 mL of ACAC as a chelating agent was added, whereby a chelating agent solution was obtained. To the chelating agent solution, 0.14 mL of POX as a pH booster was added. In Comparative Example 2, a ratio of an amount of substance of Fe ion to an amount of substance of Ni included in the Ni plate (ratio Fe/Ni) was 0.024.

(Comparative Example 3)

An electrode according to Comparative Example 3 was produced in the same manner as in Example 1, except for the following points. A mixed solvent was prepared by mixing 1.44 mL of water and 2.16 mL of ethanol. The ethanol was a product purchased from FUJI FILM Wako Pure Chemical Corporation. In the mixed solvent, 0.123 g of nickel chloride hexahydrate and 0.070 g of iron chloride hexahydrate were dissolved to prepare a solution. To this solution, 0.0486 mL of ACAC as a chelating agent was added, whereby a chelating agent solution was obtained. To the chelating agent solution, 0.262 mL of POX as a pH booster was added. In Comparative Example 3, a ratio of an amount of substance of Fe ion to an amount of substance of Ni included in the Ni plate (ratio Fe/Ni) was 0.048.

[Evaluation of effective film thickness of layered double hydroxide layer]

Measurement was carried out with respect to a single point in the center of each electrode, using a spectroscopic ellipsometer UVISEL2 manufactured by HORIBA, Ltd. under the conditions of an incident angle of 70°, a measurement wavelength range of 0.6 eV to 5.5 eV, and a spot diameter of 1 mm $\times$ 2 mm. As a result, measurement data E of the polarization parameters was obtained. Next, an optical model as shown in FIG. 2 was created, and simulation data M of the polarization parameters based on the optical model was obtained. The simulation data M of the polarization parameters was then fitted to the measurement data E of the polarization parameters. In detail, the measurement data E was analyzed using Delta Psi2 software supplied with UVISEL2, and the thickness of the interface layer, the thickness of the dense layer, and the thickness of the surface roughness layer were determined using the optical model shown in FIG. 2. In addition, a volume proportion of LDH (LDH ratio) in the interface layer and surface roughness layer was determined. For the fitting calculations in this analysis, the New Amorphous model equation and the Tauc-Lorentz equation implemented by HORIBA Jobin Yvon were used, and the result with the smaller mean square error between the simulation data M calculated from the optical model and the measurement data E was adopted. In addition, the fitting calculations were performed such that their mean square error was less than 10°.

Using the value of thickness of each layer and the value of LDH ratio obtained by the above method, the effective film thickness of the electrode for each Example and each Comparative Example was calculated based on Formula (1). The results are shown in Tables 1 and 2.

[Evaluation of overpotential of electrode]

The oxygen evolution reaction (OER) overpotential of the electrode according to each Example and each Comparative Example was evaluated. For the measurement, the followings were used: a potentiostat VersaSTAT4 manufactured by Princeton Applied Research; an alkali sample vial (200 mL) manufactured by BAS Inc.; and a Teflon cap (200 mL) manufactured by BAS Inc. As a working electrode jig, a plate electrode AE-2 manufactured by EC FRONTIER CO., LTD. was used. To the jig, the electrode as working electrode according to each Example and each Comparative Example was fixed. As a counter electrode, a double platinum wire counter electrode D.6.0305.200J manufactured by Metrohm AG was used. The current derived from the anodic reaction of the water electrolysis cell was measured using the three-electrode method under the following measurement conditions. The anodic reaction is an oxygen evolution reaction.

(Measurement conditions)

Solution: 1 mol/L KOH solution
Potential to reversible hydrogen electrode (RHE): 1.0 V to 1.7 V
Number of cycles: 5 cycles
Rate of potential sweep: 10 mV/sec
Temperature: 25°C

The overpotential was determined by subtracting a theoretical potential of 1.229 V from the voltage corresponding to the current density of 10 mA/cm$^2$ in the fifth cycle, the theoretical potential of 1.229 V being required to drive the oxygen evolution reaction. The results are shown in Tables 1 and 2.

As shown in Tables 1 and 2, the effective film thickness of the LDH layer in the electrodes of each Example was larger than the effective film thickness of the LDH layer in the electrode of each Comparative Example. The overpotential in each Example was smaller than the overpotential in each Comparative Example. This result indicates that the water electrolysis electrode used in each Example is superior in terms of electrode activity.

The difference in effective film thickness between Examples and Comparative Examples is presumed to be due to the fact that the chelating agent solutions in Examples contained water but no ethanol, whereas the chelating agent solutions in Comparative Examples contained both water and ethanol. This indicates that it is possible to adjust the effective film thickness of the LDH layer by changing the composition of the solvent in the chelating agent solution.

[Table 1]

| | Effective film thickness [nm] | Surface roughness layer | | | | | |
| --- | --- | --- | --- | --- | --- | --- | --- |
| | | Third layer | | Second layer | | First layer | |
| | | Thickness $T_{283}$ [nm] | LDH proportion [%] | Thickness $T_{282}$ [nm] | LDH proportion [%] | Thickness $T_{281}$ [nm] | LDH proportion [%] |
| Example 1 | 251 | 0 | 0 | 0 | 0 | 244.8 | 40 |
| Example 2 | 414 | 62.7 | 31 | 346.1 | 41 | 128.2 | 56 |
| Example 3 | 527 | 0 | 0 | 0 | 0 | 983 | 40 |
| Example 4 | 1171 | 0 | 0 | 29.6 | 18 | 1506.2 | 62 |
| Example 5 | 1444 | 0 | 0 | 46.5 | 45 | 60.8 | 89 |
| Example 6 | 3467 | 0 | 0 | 81.9 | 43 | 94.5 | 80 |
| Example 7 | 2748 | 0 | 0 | 72.6 | 91 | 3265.8 | 80 |
| Example 8 | 2199 | 0 | 0 | 77.2 | 72 | 2063.3 | 68 |

[Table 1] Continued

| | Dense layer | | Interface layer | | Overpotential [mV] |
| --- | --- | --- | --- | --- | --- |
| | Thickness $T_{27}$ [nm] | LDH proportion [%] | Thickness $T_{26}$ [nm] | LDH proportion [%] | |
| Example 1 | 111.8 | 100 | 58.8 | 70 | 236 |
| Example 2 | 123.8 | 100 | 65 | 88 | 228 |
| Example 3 | 123.6 | 100 | 18 | 55 | 225 |
| Example 4 | 184.8 | 100 | 65 | 72 | 224 |
| Example 5 | 1309.3 | 100 | 80 | 75 | 228 |
| Example 6 | 3331.2 | 100 | 30.1 | 84 | 231 |
| Example 7 | 0 | 100 | 80 | 87 | 220 |
| Example 8 | 671.6 | 100 | 80 | 86 | 226 |

[Table 2]

| | Effective film thickness [nm] | Surface roughness layer | | | | | |
| --- | --- | --- | --- | --- | --- | --- | --- |
| | | Third layer | | Second layer | | First layer | |
| | | Thickness $T_{283}$ [nm] | LDH proportion [%] | Thickness $T_{282}$ [nm] | LDH proportion [%] | Thickness $T_{281}$ [nm] | LDH proportion [%] |
| Comparative Example 1 | 54 | 0 | 0 | 157.1 | 5 | 11.9 | 25 |
| Comparative Example 2 | 162 | 267.8 | 3 | 129.6 | 32 | 128 | 59 |
| Comparative Example 3 | 226 | 0 | 0 | 119.3 | 13 | 125.9 | 54 |

[Table 2] Continued

| | Dense layer | | Interface layer | | Overpotential [mV] |
| --- | --- | --- | --- | --- | --- |
| | Thickness $T_{27}$ [nm] | LDH proportion [%] | Thickness $T_{26}$ [nm] | LDH proportion [%] | |
| Comparative Example 1 | 25.3 | 100 | 38.5 | 47 | 272 |
| Comparative Example 2 | 0 | 100 | 55.5 | 67 | 266 |
| Comparative Example 3 | 90 | 100 | 63 | 83 | 250 |

Many modifications and other embodiments of the present disclosure will be apparent to those skilled in the art with reference to the above description. Therefore, the above description should be interpreted only as an example, and is provided for the purpose of teaching those skilled in the art the best manner to carry out the present disclosure. The operating conditions, the composition, the structure and/or the function can be substantially modified without departing from the spirit of the present disclosure.

INDUSTRIAL APPLICABILITY

A water electrolysis electrode of the present disclosure can be used as an anode or a cathode for water electrolysis.

**Claims**

1. A water electrolysis electrode, comprising:

   an electroconductive substrate; and
   a layered double hydroxide layer formed on a surface of the electroconductive substrate, wherein
   an effective film thickness of the layered double hydroxide layer is 250 nm or more and less than 4000 nm.

2. The water electrolysis electrode according to claim 1, wherein
   the effective film thickness of the layered double hydroxide layer is 3470 nm or less.

3. The water electrolysis electrode according to claim 1, wherein
   the effective film thickness of the layered double hydroxide layer is 410 nm or more.

4. The water electrolysis electrode according to claim 1, wherein
   the layered double hydroxide layer comprises at least two transition metals selected from the group consisting of V, Cr, Mn, Fe, Co, Ni, Cu, W, and Ru.

5. The water electrolysis electrode according to claim 1, wherein

the layered double hydroxide layer comprises at least one transition metal selected from the group consisting of Fe and Ni.

6. The water electrolysis electrode according to claim 1, wherein
the layered double hydroxide layer comprises a chelating agent.

7. The water electrolysis electrode according to claim 6, wherein
the chelating agent comprises at least one selected from the group consisting of acetylacetone and a citrate.

8. A water electrolysis anode comprising the water electrolysis electrode according to claim 1.

9. A water electrolysis cathode comprising the water electrolysis electrode according to claim 1.

10. A water electrolysis cell comprising:

    an anode;
    a cathode; and
    a separator, wherein
    at least one selected from the group consisting of the following conditions is satisfied:

        the anode is the water electrolysis anode according to claim 8; and
        the cathode is the water electrolysis cathode according to claim 9.

11. A water electrolysis cell comprising:

    an anode;
    a cathode; and
    an anion-exchange membrane, wherein
    at least one selected from the group consisting of the following conditions is satisfied:

        the anode is the water electrolysis anode according to claim 8; and
        the cathode is the water electrolysis cathode according to claim 9.

12. A water electrolysis device comprising:

    the water electrolysis cell according to claim 10 or 11; and
    a voltage applying unit configured to apply voltage between the cathode and the anode.

10   20

# FIG.1

1m

25   25   25   25   25   25

$T_{20}$   $T_{28}$   $T_{27}$   $T_{26}$

28
27   20
26

10

# FIG.2

| ⊘ : $M_1^{2+}$ | ● : $M_2^{3+}$ | ○ : $OH^-$ |
| ▥ : $A^{n-}$ | ▦ : $H_2O$ | |

## FIG.3

## FIG.4

2

2b

2a

2s  2n  2p  2m

**FIG.5**

3

40

2b

2a

2

2s  2n  2p  2m

**FIG.6**

FIG.7

FIG.8

## INTERNATIONAL SEARCH REPORT

| International application No. |
|---|
| **PCT/JP2024/021773** |

| A. CLASSIFICATION OF SUBJECT MATTER |
|---|
| ***C25B 11/075***(2021.01)i; ***C25B 1/04***(2021.01)i; ***C25B 9/00***(2021.01)i; ***C25B 13/08***(2006.01)i<br>FI:  C25B11/075; C25B1/04; C25B9/00 A; C25B13/08 301 |
| According to International Patent Classification (IPC) or to both national classification and IPC |

| B. FIELDS SEARCHED |
|---|
| Minimum documentation searched (classification system followed by classification symbols)<br>  C25B1/00-15/08 |
| Documentation searched other than minimum documentation to the extent that such documents are included in the fields searched<br>  Published examined utility model applications of Japan 1922-1996<br>  Published unexamined utility model applications of Japan 1971-2024<br>  Registered utility model specifications of Japan 1996-2024<br>  Published registered utility model applications of Japan 1994-2024 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X<br><br>Y | CN 115261924 A (HUANENG CLEAN ENERGY RESEARCH INSTITUTE) 01 November 2022 (2022-11-01)<br>  claims, paragraphs [0002]-[0003], [0006]-[0036], [0044]-[0054] | 1-5, 9-12<br><br>6-9 |
| X<br><br>Y | JP 2021-513606 A (THE BOARD OF TRUSTEES OF THE LELAND STANFORD JUNIOR UNIVERSITY) 27 May 2021 (2021-05-27)<br>  claims, paragraphs [0044]-[0046], [0053], [0070]-[0071], fig. 1, 25 | 1-5, 8, 10-12<br><br>6-9 |
| X<br><br>Y | KR 10-2022-0064161 A (HANWHA SOLUTIONS CORPORATION) 18 May 2022 (2022-05-18)<br>  claims, paragraphs [0066]-[0072], [0152]-[0260], fig. 1 | 1-5, 8, 10-12<br><br>6-7, 9 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 August 2024** | **27 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/021773** |

| C. | DOCUMENTS CONSIDERED TO BE RELEVANT | |
| --- | --- | --- |
| Category* | Citation of document, with indication, where appropriate, of the relevant passages | Relevant to claim No. |
| Y | KR 10-2022-0031516 A (KOREA INSTITUTE OF MATERIALS SCIENCE) 11 March 2022 (2022-03-11)<br>  paragraphs [0038]-[0040] | 6-7 |
| Y | WO 2022/071128 A1 (PANASONIC INTELLECTUAL PROPERTY MANAGEMENT CO., LTD.) 07 April 2022 (2022-04-07)<br>  paragraphs [0074]-[0075] | 6-7 |

Form PCT/ISA/210 (second sheet) (July 2022)

EP 4 733 451 A1

## INTERNATIONAL SEARCH REPORT
### Information on patent family members

International application No.

**PCT/JP2024/021773**

| Patent document cited in search report | | | Publication date (day/month/year) | Patent family member(s) | Publication date (day/month/year) |
|---|---|---|---|---|---|
| CN | 115261924 | A | 01 November 2022 | (Family: none) | |
| JP | 2021-513606 | A | 27 May 2021 | US 2021/0002777 A1 claims, paragraphs [0044]-[0046], [0053], [0068]-[0069], fig. 1, 25 <br> JP 2023-63376 A <br> EP 3752664 A1 <br> KR 10-2020-0110455 A <br> CN 111936669 A | |
| KR | 10-2022-0064161 | A | 18 May 2022 | US 2023/0313395 A1 claims, paragraphs [0056]-[0059], [0112]-[0182], fig. 1 <br> JP 2023-549368 A <br> EP 4245891 A1 <br> CN 116490644 A | |
| KR | 10-2022-0031516 | A | 11 March 2022 | (Family: none) | |
| WO | 2022/071128 | A1 | 07 April 2022 | US 2023/0235467 A1 paragraphs [0091]-[0092] <br> EP 4223417 A1 <br> CN 116194213 A | |

Form PCT/ISA/210 (patent family annex) (July 2022)

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017154134 A1

- JP 2018043193 A

### Non-patent literature cited in the description

- **SEYEONG LEE et al.** Operational durability of three-dimensional Ni-Fe layered double hydroxide electrocatalyst for water oxidation. *ElectrochimicaActa*, 2019, vol. 315, 94-101

- **JIANDE CHEN et al.** Interfacial Interaction between FeOOH and Ni-Fe LDH to Modulate the Local Electronic Structure for Enhanced OER Electrocatalysis. *ACS Catalysis*, 2018, vol. 8, 11342-11351